# EUROPEAN PATENT APPLICATION

(11) **EP 4 510 152 A1**
(43) Date of publication of application: **19.02.2025**
(21) Application number: 24193586.5
(22) Date of filing: 08.08.2024
(51) Int. Cl.: G21K 1/00, G06N 10/00

(54) **DEVICES FOR CONTROLLING TRAPPED IONS AND METHODS FOR MANUFACTURING THEREOF**

(30) Priority: 09.08.2023 EP 23190524
(71) Applicant: Infineon Technologies Austria AG, 9500 Villach (AT)
(72) Inventor: BRANDL, Matthias, 85614 Kirchseeon (DE); SCHÜPPERT, Klemens Karl Heinrich, 9584 Goritschach (AT)
(74) Representative: Lambsdorff & Lange Patentanwälte Partnerschaft mbB

(57) **Abstract**

A micro-fabricated device (400A) for controlling trapped ions includes a first ion trap module (2A) including first electrodes configured to trap ions in a zone above the first electrodes and a second ion trap module laterally arranged next to the first ion trap module (2B, 2C) and including second electrodes configured to trap ions in a zone above the second electrodes. The first ion trap module and the second ion trap module are mechanically connected. The first electrodes and the second electrodes are aligned relative to each other so as to be configured to provide a shuttling of ions between the first ion trap module and the second ion trap module along the first electrodes and the second electrodes.

## Description

### Technical Field

The present disclosure relates to devices for controlling trapped ions. In addition, the present disclosure relates to methods for manufacturing devices for controlling trapped ions.

### Background

Trapped ions are one of the most promising candidates for being used as qubits in quantum computers, since they can be trapped with long lifetimes in a scalable array by means of electromagnetic fields. Ion traps may consist of various layers, such as e.g. trapping layers, optical layers, electronic layers, etc. Ion traps are getting larger and larger. As larger and larger structures are built from multiple thin layers, thermal mismatch between these layers may result in mechanical stress on the layers and may even deform the ion trap formed from the layers. Manufacturers and developers of devices for controlling trapped ions are constantly striving to improve their products. In particular, it may be desirable to provide ion trap devices with reduced mechanical stress as well as suitable methods for fabricating such devices. It may also be desirable to find a way for scaling an ion trap device to become larger.

### Summary

An aspect of the present disclosure relates to a micro-fabricated device for controlling trapped ions. The device comprises a first ion trap module comprising first electrodes configured to trap ions in a zone above the first electrodes and a second ion trap module laterally arranged next to the first ion trap module and comprising second electrodes configured to trap ions in a zone above the second electrodes. The first ion trap module and the second ion trap module are mechanically connected. The first electrodes and the second electrodes are aligned relative to each other so as to be configured to provide a shuttling of ions between the first ion trap module and the second ion trap module along the first electrodes and the second electrodes.

A further aspect of the present disclosure relates to a method for assembling a device for controlling trapped ions. The method comprises an act of providing a first ion trap module comprising first electrodes configured to trap ions in a zone above the first electrodes. The method further comprises an act of arranging a second ion trap module comprising second electrodes configured to trap ions in a zone above the second electrodes laterally next to the first ion trap module. The method further comprises an act of mechanically connecting the first ion trap module and the second ion trap module, wherein the first electrodes and the second electrodes are aligned relative to each other so as to be configured to provide a shuttling of ions between the first ion trap module and the second ion trap module along the first electrodes and the second electrodes.

### Brief Description of the Drawings

Devices and methods in accordance with the disclosure are described in more detail below based on the drawings. The elements of the drawings are not necessarily to scale relative to each other. Similar reference numerals may designate corresponding similar parts. The technical features of the various illustrated examples can be combined unless they exclude each other and/or can be selectively omitted if not described to be necessarily required.
Figure 1 includes Figures 1A and 1B schematically illustrating a side view and a top view of a device 100 for controlling trapped ions in accordance with the disclosure.
Figure 2 schematically illustrates a side view of a device 200 for controlling trapped ions in accordance with the disclosure.
Figure 3 schematically illustrates a side view of a device 300 for controlling trapped ions in accordance with the disclosure.
Figure 4 includes Figures 4A and 4B schematically illustrating top views of devices 400A and 400B for controlling trapped ions in accordance with the disclosure.
Figure 5 schematically illustrates a side view of a device 500 for controlling trapped ions in accordance with the disclosure.
Figure 6 schematically illustrates a side view of a device 600 for controlling trapped ions in accordance with the disclosure.
Figure 7 schematically illustrates a side view of a device 700 for controlling trapped ions in accordance with the disclosure.
Figure 8 schematically illustrates a side view of a device 800 for controlling trapped ions in accordance with the disclosure.
Figure 9 schematically illustrates a top view of a device 900 for controlling trapped ions in accordance with the disclosure.
Figure 10 schematically illustrates a side view of a device 1000 for controlling trapped ions in accordance with the disclosure.
Figure 11 schematically illustrates a side view of a device 1100 for controlling trapped ions in accordance with the disclosure.
Figure 12 includes Figures 12A to 12D schematically illustrating a side view and various sectional top views of a device 1200 for controlling trapped ions in accordance with the disclosure.
Figure 13 illustrates a flowchart of a method for assembling a device for controlling trapped ions in accordance with the disclosure.

### Detailed Description

In the following, micro-fabricated devices for controlling trapped ions are described. For example, such devices may be used for quantum computing. Trapped ions are one of the most promising candidates for being used as qubits in quantum computers, since they can be trapped with long lifetimes in a scalable array by means of electromagnetic fields. However, ion trap devices as described herein are not restricted to the application of quantum computing. The ion trap devices may also be used in other applications, such as e.g. atomic clocks. Ion trap devices may be implemented as ion trap chips in form of small, micro-fabricated devices configured to trap and manipulate individual ions in a controlled manner. It is to be noted that the following description is not restricted to ions, but may also be applied to atoms, molecules or other quantum particles/systems (e.g. electrons or defect centers).

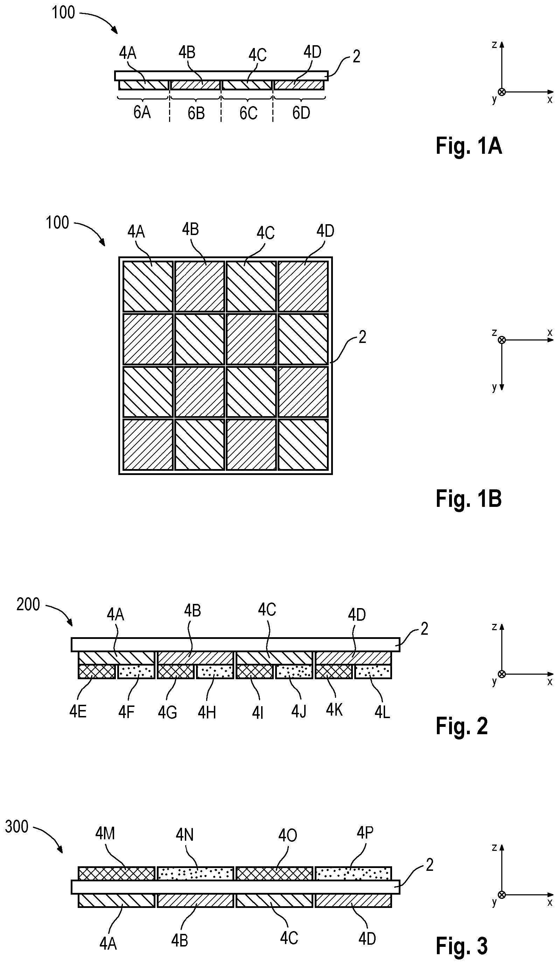

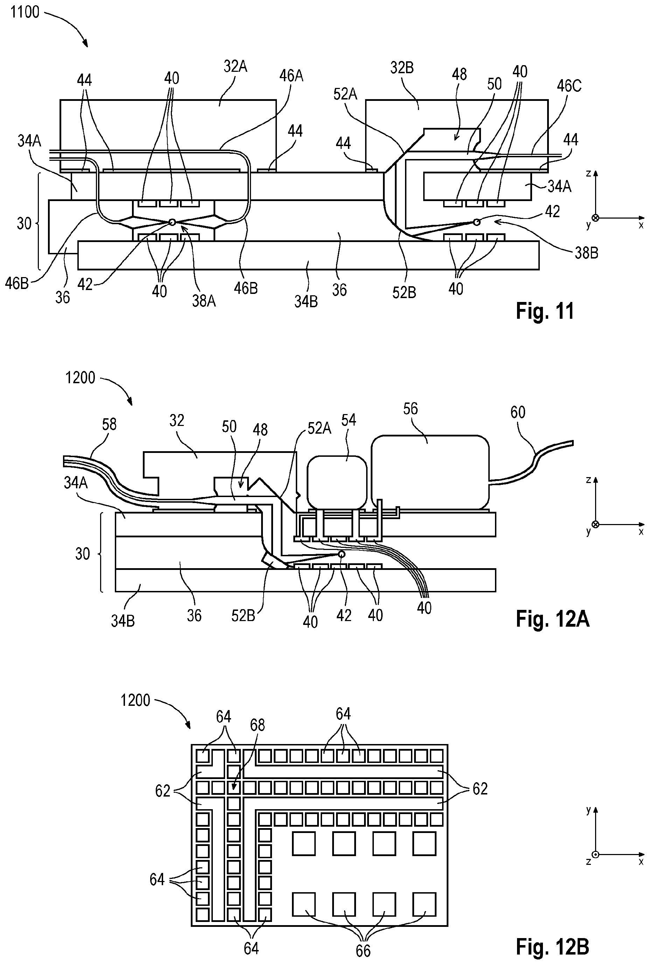

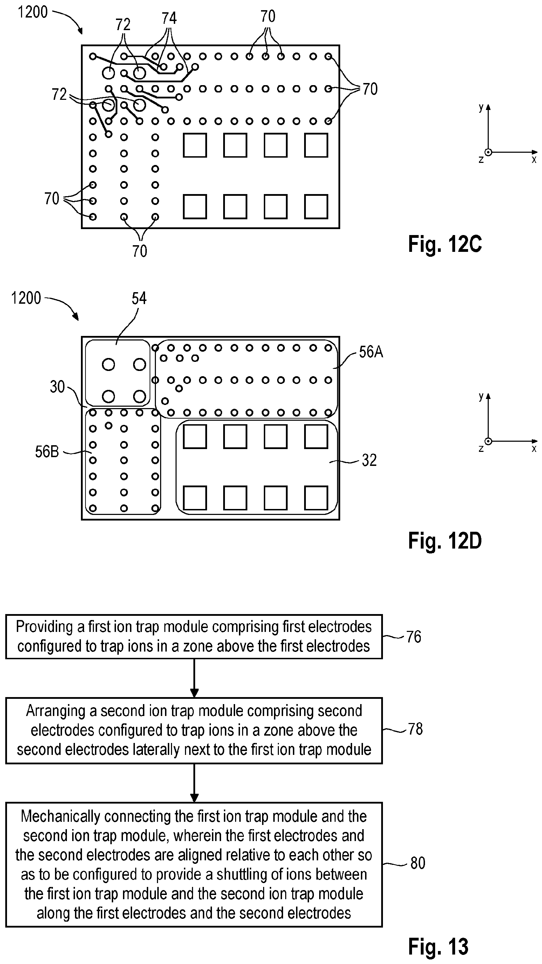

The micro-fabricated device 100 for controlling trapped ions of Figure 1 is illustrated in a general manner in order to qualitatively specify aspects of the disclosure. The device 100 may be extended by any of the aspects described in connection with other examples. For example, Figures 11 and 12 described later on illustrate more detailed versions of devices for controlling trapped ions in accordance with the disclosure.

The device 100 may include an ion trap module 2 and a first module 4A. The ion trap module 2 may include a first mounting region 6A on its bottom surface, wherein the first module 4A may be mounted on the first mounting region 6A. The ion trap module 2 and the first module 4A may be electrically and/or optically coupled via the first mounting region 6A. Throughout this description, the terms "module", "tile", "chiplet" may be interchangeably used. Information on specific functionalities of the modules of the device 100 is provided in more detail below. Similarly, information on specific examples of electrical and optical interconnections between the modules of the device 100 is provided below.

The ion trap module 2 may further include a second mounting region 6B, and the device 100 may further include a second module 4B, wherein the second module 4B may be mounted on the second mounting region 6B of the ion trap module 2. The ion trap module 2 and the second module 4B may be electrically and/or optically coupled via the second mounting region 6B. In the illustrated example, the first module 4A and the second module 4B may be mounted on a same side of the ion trap module 2.

The ion trap module 2 may further include a third mounting region 6C, and the device 100 may further include a third module 4C, wherein the third module 4C may be mounted on the third mounting region 6C of the ion trap module 2. The ion trap module 2 and the third module 4C may be electrically and/or optically coupled via the third mounting region 6C.

The ion trap module 2 may further include a fourth mounting region 6D, and the device 100 may further include a fourth module 4D, wherein the fourth module 4D may be mounted on the fourth mounting region 6D of the ion trap module 2. The ion trap module 2 and the fourth module 4D may be electrically and/or optically coupled via the fourth mounting region 6D.

As can be seen from the top view of Figure 1B, the device 100 may include additional modules arranged on the bottom surface of the ion trap module 2. However, in the following, reference is only made to mounted modules 4A to 4D for the sake of simplicity. Each of the mounting regions 6A to 6D may correspond to an area of the bottom surface of the ion trap module 2. In the illustrated example, the mounted modules 4A to 4D and the corresponding mounting regions 6A to 6D may be square-shaped. In further examples, the shapes of the modules 4A to 4D and the mounting regions 6A to 6D may be chosen differently.

The ion trap module 2 and the modules 4A to 4D of the device 100 may be separate from each other, i.e. they may correspond to separate components of the device 100. For example, the modules may be manufactured separate from each other and the separately manufactured modules may afterwards be assembled to form the assembled device 100. When viewed in a direction perpendicular to the first mounting region 6A, i.e. when viewed in the z-direction, an area (or footprint) of the ion trap module 2 may be greater than an area (or footprint) of the first module 4A. The same may hold true for the other mounted modules 4B to 4D. Accordingly, the ion trap 2 may also be referred to as large module, while the mounted modules 4A to 4D may be referred to as small modules.

The ion trap module 2 may be configured to trap ions. In this regard, the ion trap module 2 may include a plurality of electrodes (not shown) configured to trap and shuttle (or transport) ions in a zone above the electrodes. In the illustrated example, the electrodes may e.g. be arranged on the top surface of the ion trap module 2. An ion may be shuttled in the zone above the electrodes in one or more lateral directions (e.g. in the x-y-plane) by means of AC and DC voltages that may be separately coupled to specific electrodes of the plurality of electrodes. For example, the ion trap module 2 may include some or all features of ion trap modules described in more detail in connection with Figures 11 and 12. An exemplary arrangement of DC and RF electrodes of an ion trap module is particularly shown and described in connection with Figure 12B. In contrast to the ion trap module 2, the other modules 4A to 4D of the device 100 are not restricted to a specific module type. Of course, one or multiple of these other modules may also correspond to an ion trap module in one example. In further examples, one or multiple of the other modules may correspond to one or multiple of the module types specified in the following.

A DC control module may be configured to control DC signals provided to DC electrodes of the ion trap module. In particular, the DC electrodes may be configured for static electric-field trapping and/or for moving the ions within the ion trap module. In a non-limiting example, a DC control module may include at least one of a switch matrix, a multiplexer, a digital-to-analog converter, or the like. Usage of a DC control module in a device for controlling trapped ions is shown and described in connection with Figure 12.

A radio frequency (RF) control module may be configured to control RF signals provided to RF electrodes of the ion trap module. In particular, the RF electrodes may be configured for RF trapping. For example, an RF control module may be configured to distribute RF signals and may, in this regard, also be referred to as RF redistribution module. Alternatively, or additionally, an RF control module may be configured to control at least one of an amplitude or a phase of RF signals. In this regard, a same "global" frequency may be used for the RF signals during an operation of the device 100. Usage of an RF control module in a device for controlling trapped ions is shown and described in connection with Figure 12.

An optical module may be configured to perform one or multiple of the operations in connection with light as described below. In this regard, light may correspond to laser light which may be provided in form of one or multiple laser beams. For example, the optical module may be configured for generating or amplifying light. In a further example, the optical module may be configured for directing light from a device-external light source to the ion trap module. In a further example, the optical module may be configured for splitting and distributing light in multiple positions of the device 100. In another example, the optical module may be configured for performing at least one light manipulation process. In a further example, the optical module may be configured for performing at least one light detection process. In yet another example, the optical module may be configured for coupling out light from the device 100 to a device-external component. Usage of optical modules in a device for controlling trapped ions is shown and described in connection with Figures 11 and 12.

A microwave module may be configured to provide and distribute microwave radiation in multiple positions of the device 100. For example, microwave radiation may be used for performing operations of microwave-based quantum gates.

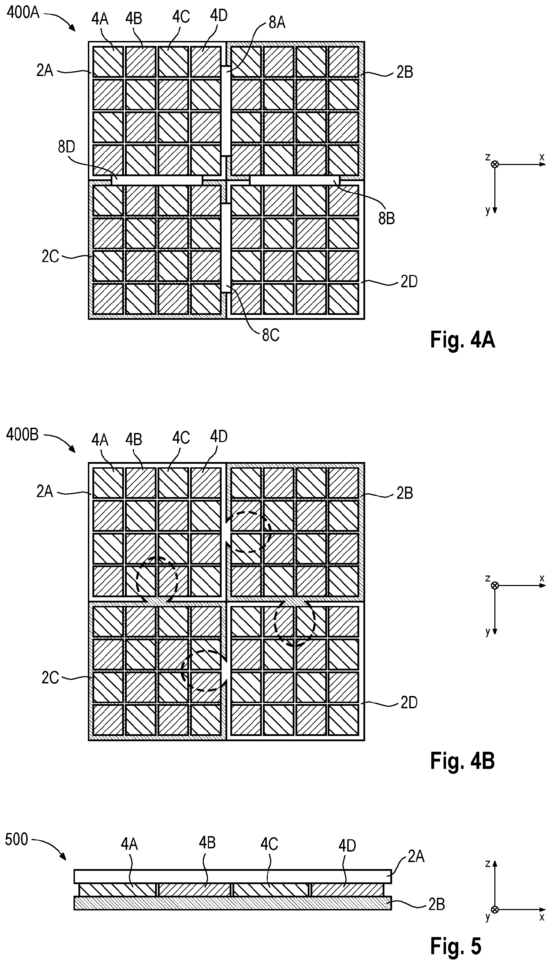

A connector module may be configured to mechanically connect multiple modules of the device 100. An exemplary usage of connector modules is shown and described in connection with Figure 4A. For example, a cooling module may be configured to connect one or multiple of the modules to a cryostat. In yet a further example, a module may correspond to a thermal anchoring module.

Further module types may at least partially combine functionalities of previously described module types. For example, control electronics for DC electrodes and for active optics may be similar in some examples. A further module type may thus combine (or mix) features, that may usually be provided by a DC module and an optical module separated therefrom, in one single module.

Modules of the device 100 may provide (in particular fully) distinct functionalities required for an operation of the device 100. For example, the ion trap module 2 and the first module 4A, or the first module 4A and the second module 4B, may provide distinct functionalities for an operation of the device 100. In other words, each module of the device 100 may provide a well-defined subset of functionality that may differ from a well-defined subset of functionality of another module. Each module may be configured to be combined with the other modules of the device 100 in order to provide the overall functionality of the device 100 for controlling trapped ions. In this regard, the device 100 may therefore be referred to as modularly assembled device 100.

In a non-limiting illustrative example of distinct functionalities, the first module 4A may be a DC control module for controlling DC signals while the ion trap module 2 may be configured to trap ions. All operations for controlling the DC signals are exclusively performed in the DC control module while the ion trap module may only receive the DC signals, but may not at all control these signals. That is, the well-defined subset of functionality of controlling the DC signals may be completely located in the DC control module.

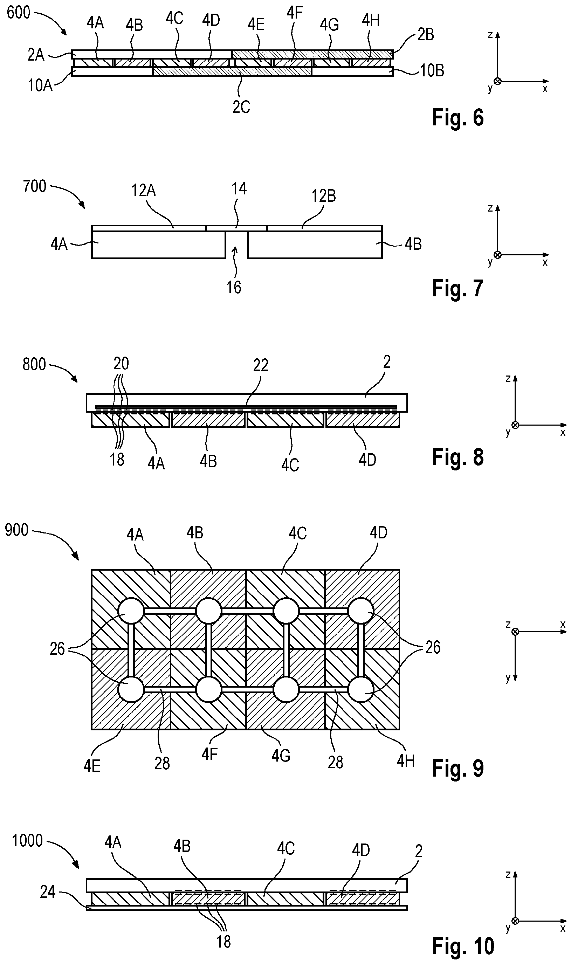

The modules of the device 100 may be electrically coupled to each other. In this regard, an electrical connection between the modules is not restricted to a specific type and may be based on one or multiple of the following techniques. Specific examples for electrical connections between modules are shown and described in connection with Figures 7 to 10. In one example, an electrical connection between modules may be provided by one or multiple solder bumps (e.g. reflow solder). Here, a pitch between two (directly) adjacent solder balls may be greater than about 200um to about 300um. Solder bumps may be configured to at least partially absorb mechanical stress that may occur in the device 100. In a further example, an electrical connection between modules may be provided by one or multiple copper pillar bumps. A copper pillar bump may include a copper pillar and a solder cap arranged thereon. Here, a pitch between two (directly) adjacent copper pillar bumps may be smaller than about 200pm. In another example, modules may be electrically connected based on hybrid bonding or direct bond interconnect (DBI). Hybrid bonding may be specified as a permanent bond that may combine a dielectric bond (e.g. SiOx) with embedded metal (e.g. Cu) to form interconnections. In a further example, an electrical connection between modules may be based on an anisotropic conductive adhesive. In yet another example, modules may be electrically interconnected using one or multiple wire bonds.

The modules of the device 100 may be optically coupled to each other. In this regard, an optical connection between the modules is not restricted to a specific type and may be based on one or multiple of the following techniques. Specific examples for optical connections between modules are shown and described in connection with Figures 11 and 12. In one example, modules may be optically coupled by one or multiple waveguides. In a further example, an optical connection between modules may be based on one or multiple free space (light) beams. In yet another example, modules may be optically interconnected by means of photonic wire bonds and/or optical fibers.

The modules of the device 100 may be mechanically coupled to each other. In this regard, a mechanical connection between modules is not restricted to a specific type. Specific examples for mechanical connections between modules are mentioned in connection with Figures 11 and 12. For example, a mechanical connection between two modules may be provided or may be based on at least one of gluing (e.g. adhesives), bonding (e.g. anodic, eutectic, fusion, thermopressure), welding, etc. A fabrication of mechanical connections may use alignment marks and/or guiding structures.

The modules of the device 100 may be fabricated on the basis of any suitable material. For example, the modules of the device 100 may fabricated from at least one of silicon, fused silica, sapphire, diamond, silicon carbide, and glass. In particular, the modules of the device 100 may be fabricated from different materials. For example, the ion trap module 2 and the first module 4A may be fabricated from materials that may at least partially differ. Due to differing fabrication materials a thermal expansion coefficient of the ion trap module 2 may differ from a thermal expansion coefficient of the first module 4A.

As can be seen from Figures 1A and 1B, the ion trap module 2 may be larger than the other modules 4A to 4D of the device 100. The thermal expansion coefficient of the ion trap module 2 may impose a thermal expansion over a larger distance. The physical dimensions of the smaller modules 4A to 4D may be selected such that a mismatch in the thermal expansion coefficients of the modules does not place too much mechanical stress on the ion trap module 2. This way, a warpage of the ion trap module 2 may be avoided or at least reduced. When choosing the footprints of the modules 4A to 4D to be smaller than the footprint of the ion trap module 2, mechanical stress between the modules of the device 100 may be reduced.

The micro-fabricated device 200 for controlling trapped ions of Figure 2 may include some or all features of the device 100 of Figure 1. Similar to Figure 1, the device 200 may include an ion trap module 2 and a first layer of modules 4A to 4D arranged over mounting regions on the bottom surface of the ion trap module 2. In contrast to Figure 1, the device 200 may include an additional second layer of modules 4E to 4L that may be mounted on the bottom surfaces of the first layer modules 4A to 4D. In the exemplary side view of Figure 2, two second layer modules may be mounted on the bottom surface of each first layer module. However, it is to be understood that the actual number of second layer modules mounted on the first layer modules 4A to 4D may differ depending on the considered case. When viewed in the z-direction, an area (or footprint) of one of the first layer modules 4A to 4D may be greater than an area (or footprint) of one of the second layer modules 4E to 4L.

The micro-fabricated device 300 for controlling trapped ions of Figure 3 may include some or all features of previously described devices. Similar to Figure 1, the device 300 may include an ion trap module 2 and a first layer of four modules 4A to 4D mounted over mounting regions on the bottom surface of the ion trap module 2. In contrast to Figure 1, the device 300 may include an additional second layer of modules 4M to 4P that may be mounted over mounting regions on the upper surface of the ion trap module 2. That is, the first and second layer modules may be mounted on opposing sides of the ion trap module 2.

The micro-fabricated device 400A for controlling trapped ions of Figure 4A may include some or all features of previously described devices. The device 400A may include at least two ion trap modules laterally arranged next to each other. In the illustrated example, the device 400A may include an exemplary number of four ion trap modules 2A to 2D, wherein a plurality of smaller modules 4 may be mounted on mounting regions of the ion trap modules 2A to 2D. For example, each of the ion trap modules 2A to 2D may be similar to the ion trap module 2 of Figure 1. The device 400A may further include one or multiple connector modules 8A to 8D configured to mechanically connect the ion trap modules 2A to 2D and/or to stabilize a mechanical connection between the ion trap modules 2A to 2D. In particular, a connector module may provide a mechanical connection between directly adjacent ion trap modules. In the illustrated case, the device 400A may include an exemplary number of four connector modules 8A to 8D.

The first ion trap module 2A may include first electrodes (not shown) configured to trap ions in a zone above the first electrodes. For example, the first electrodes may be arranged on a surface of the first ion trap module 2A opposite to the surface on which the modules 4A to 4D may be mounted. That is, the first electrodes may be arranged on a top surface of the first ion trap module 2A, while the modules 4A to 4D may be mounted on the bottom surface of the first ion trap module 2A. An ion may be shuttled in the zone above the electrodes (i.e. above the top surface of the first ion trap module 2A) in one or more lateral directions (e.g. in the x-y-plane) by means of AC and DC voltages that may be separately coupled to specific electrodes of the plurality of electrodes. In one example, the first electrodes of the first ion trap module 2A may be or may include DC electrodes. In a further example, the first electrodes of the first ion trap module 2A may be or may include RF electrodes and DC electrodes. Note that a more detailed exemplary arrangement of DC electrodes and RF electrodes of an ion trap module is shown and described in connection with Figure 12B.

Similar to the first ion trap module 2A, the second ion trap module 2B arranged laterally next to the first ion trap module 2A may include second electrodes (not shown) configured to trap and shuttle ions in a zone above the second electrodes. Above comments on the first electrodes of the first ion trap module 2A may also hold true for the second electrodes of the second ion trap module 2B. The first electrodes of the first ion trap module 2A and the second electrodes of the second ion trap module 2B may be aligned relative to each other so as to be configured to provide a shuttling of ions between the first ion trap module 2A and the second ion trap module 2B along the first electrodes and the second electrodes. By suitably applying AC and/or DC voltages to the electrodes of the ion trap modules 2A and 2B, ions may be shuttled from the first ion trap module 2A to the second ion trap module 2B and/or vice versa. In this context, the first electrodes of the first ion trap module 2A and the second electrodes of the second ion trap module 2B may be particularly arranged in a common plane. In the illustrated example, the first electrodes and the second electrodes may e.g. be arranged in an x-y-plane at a same height with respect to the z-coordinate.

It is to be understood that the further ion trap modules 2C and 2D of the device 400A may also include electrodes configured to trap and shuttle ions in a zone above the respective electrodes. The electrodes of an ion trap module may be aligned relative to the electrodes of an adjacent ion trap module such that a shuttling of ions between the neighboring ion trap modules along their electrodes may be provided. In the illustrated example, a transport of ions between all four ion trap modules 2A to 2D may be provided. Ions may be shuttled between any positions in the zones located above the electrodes of the ion trap modules 2A to 2D.

It is further to be understood that the device 400A may include an arbitrary number of individual ion trap modules that may be mechanically connected and assembled as shown in the example of Figure 4A. In this way, a plurality of individual ion trap modules may be modularly assembled to form a large scale ion trap module having a desired size. Ion trap devices in accordance with the disclosure may thus support a straightforward and easy scaling of ion trap devices to larger sizes such that a number of trapped ions may be increased. The additional modules 4A to 4D providing one or more of the various functionalities as previously described may be mounted on the top surface and/or on the bottom surface of one or more of the ion trap modules 2A to 2D.

The micro-fabricated device 400B for controlling trapped ions of Figure 4B may include some or all features of previously described devices. In particular, the device 400B of Figure 4B may be at least partially similar to the device 400A of Figure 4A such that above comments with regard to the device 400A may also hold true for the device 400A. In contrast to Figure 4A, the device 400B may not necessarily require connector modules as shown and described in connection with Figure 4A. Alternatively, or additionally, a mechanical connection between adjacent ion trap modules may be provided in the manner of jigsaw puzzle pieces. For example, a first ion trap module may include one or multiple notches arranged at a periphery of the first ion trap module. In addition, an adjacent second ion trap module may include one or multiple protruding portions arranged at a periphery of the second ion trap module. The first and second ion trap module may then be mechanically connected (or interlocked) by inserting the protruding portion(s) of the second ion trap module into the notch(es) of the first ion trap module. Based on such interlocking scheme an arbitrary number of ion trap modules may be mechanically interconnected in two or three spatial dimensions without the need of connector modules or like connecting means. In the example of Figure 4B, each of the ion trap modules 2A to 2D may exemplarily include one notch and one protruding portion, wherein the protruding portions of the ion trap modules are qualitatively indicated by dashed lines. The protruding portion of each ion trap module may be inserted into the notch of an adjacent ion trap module, thereby providing a mechanical connection between these adjacent ion trap modules. It is to be understood that, in further examples, the number of notches and protruding portions may be chosen differently. Similar to the example of Figure 4A, electrodes of the individual ion trap modules 2A to 2D may be aligned relative to each other such that a shuttling of ions between the ion trap modules 2A to 2D along the electrodes of the ion trap modules 2A to 2D may be provided.

The micro-fabricated device 500 for controlling trapped ions of Figure 5 may include some or all features of previously described devices. The device 500 may include two ion trap modules 2A and 2B as well as a plurality of smaller modules 4A to 4D arranged in-between. In one example, the device 500 may correspond to the device 100 of Figure 1 with an additional ion trap module 2B mounted on the bottom surfaces of the small modules 4A to 4D. In particular, the two ion trap modules 2A and 2B may have similar thermal expansion coefficients in order to reduce mechanical stress between the modules of the device 500.

The micro-fabricated device 600 for controlling trapped ions of Figure 6 may include some or all features of previously described devices. The device 600 may include a first module layer including two ion trap modules 2A and 2B as well as a second module layer including a plurality of small modules 4A to 4H that may be mounted over mounting regions on the bottom surfaces of the ion trap modules 2A and 2B. The device 600 may further include a third module layer including two modules 10A and 10B as well as an ion trap module 2C arranged in-between. Each of the modules 10A and 10B may have an area (or footprint) that may be greater than the footprints of the small modules 4A to 4H and that may be smaller than the footprints of the ion trap modules 2A to 2C. In contrast to previous examples, the device 600 may include multiple ion trap modules arranged in a same layer. In particular, the ion trap modules 2A to 2C and the modules 10A and 10B may have similar thermal expansion coefficients.

Figure 7 illustrates a detail of a micro-fabricated device 700 for controlling trapped ions that may include some or all features of previously described devices. Figure 7 is intended to illustrate an example for an RF connection between modules of the device 700. The device 700 may (inter alia) include a first module 4A and a second module 4B. Each of the modules 4A and 4B may include one or multiple RF traces 12A and 12B that may be arranged on the upper surface of the respective module. A lateral (or horizontal) RF connection between the modules 4A and 4B may be provided by one or multiple RF bridges 14 that may extend over a gap 16 between the modules 4A and 4B. The RF bridge 14 may be electrically connected to each of the RF traces 12A and 12B of the modules 4A and 4B. In particular, the RF connection provided by the RF bridge 14 may provide an extremely low ohmic connection.

The micro-fabricated device 800 for controlling trapped ions of Figure 8 may include some or all features of previously described devices. Figure 8 is intended to illustrate an example for a DC connection between modules of the device 800. For example, the device 800 may be at least partially similar to the device 100 of Figure 1. The device 800 may include an ion trap module 2 with multiple small modules 4A to 4D mounted thereon. Each of the small modules 4A to 4D may include electrical contacts 18 that may be electrically connected to electrical contacts 20 of the ion trap module 2. The ion trap module 2 may include one or multiple DC connecting lines 22 that may be electrically coupled to the electrical contacts 20 of the ion trap module 2 and may thus be configured to provide a lateral electrical DC connection between two or more of the small modules 4A to 4D.

The micro-fabricated device 900 for controlling trapped ions of Figure 9 may include some or all features of previously described devices. Figure 9 is intended to illustrate an example for an electrical connection between modules of the device 900. In the illustrated case, the device 900 may include an exemplary number of eight small modules 4A to 4H that may be mounted on a large module. Devices in accordance with the disclosure may be operated in a cryogenic environment. In this regard, the device 900 may be configured to be mechanically and thermally coupled to a cryostat head (not shown), wherein a socket (not shown) may be used to mount the device 900 to the cryostat head. Each of the modules 4A to 4H may be configured to be electrically connected to the socket (or alternatively to a flexible printed circuit board) via one or multiple electrical connections 26. In the illustrated example, the electrical connections 26 may extend in the z-direction. The socket (or alternatively the flexible printed circuit board) may include multiple electrical connections 28 that may provide an electrical coupling between the electrical connections 26. In the illustrated example, the electrical connections 28 may extend in the x-y-plane. As a result, an electrical connection between the small modules 4A to 4H may be provided by means of the electrical connections 26 and 28.

The micro-fabricated device 1000 for controlling trapped ions of Figure 10 may include some or all features of previously described devices. In the illustrated side view of Figure 10, the device 1000 may include an ion trap module 2 and an exemplary number of four small modules 4A to 4D mounted thereon. In addition, the device 1000 may include a flexible printed circuit board 24 arranged over the bottom surfaces of the small modules 4A to 4D. In the illustrated example, electrical contacts 18 of the two small modules 4B and 4D may be electrically connected to the flexible printed circuit board 24. An electrical connection between the modules 4B and 4D may then be provided via one or multiple connecting lines of the flexible printed circuit board 24. In one example, the flexible printed circuit board 24 may be configured for feeding signals in one or more electronic modules (e.g. DC control modules). In a further example, the flexible printed circuit board 24 may be configured to provide an electrical connection between a DC redistribution module and individual DC modules.

The micro-fabricated device 1100 for controlling trapped ions of Figure 11 may be regarded as a more detailed version of previously described devices. The device 1100 may include an ion trap module 30 as well as an exemplary number of two optical modules 32A and 32B arranged over the upper surface of the ion trap module 30. The device 1100 may include one or multiple additional modules which are not illustrated for the sake of simplicity. For example, such additional modules may be arranged in a space between the optical modules 32A and 32B. The number and types of the additional modules may depend on the specific design and functionality of the device 1100. Note that the example of Figure 12 described later on illustrates a device including additional module types.

The ion trap module 30 may include a first substrate 34A and a second substrate 34B spaced apart from the first substrate 34A. Each of the substrates 34A and 34B may include or may be made of a dielectric material or a semiconductor material. For example, each of the substrates 34A and 34B may include or may be made of at least one of sapphire, fused silica, quartz, silicon, etc. The ion trap module 30 may correspond to an ion trap module 2 as described in previous examples. For example, the ion trap modules 2A to 2D of Figures 4A and 4B may be implemented in form of the ion trap module 30 of Figure 11. That is, multiple ion trap modules 30 may be assembled to form a large scale ion trap device as shown and described in connection with the examples of Figures 4A and 4B.

One or multiple spacer elements 36 may be arranged between the substrates 34A and 34B. The spacer elements 36 may be configured to define the distance between the substrates 34A and 34B. For example, the spacer elements 36 may be bonded to the substrates 34A and 34B based on a wafer-bonding technique. In this regard, at least one of glass-bonding, eutectic bonding, anodic bonding, or thermocompression bonding may be applied. A material for the spacer elements 36 may be chosen accordingly.

The substrates 34A and 34B and the spacer elements 36 may be arranged in a way such that one or multiple cavities 38A and 38B may be formed in the ion trap module 30. In the illustrated case, an exemplary number of two cavities 38A and 38B may be formed. In further examples, the number of cavities may differ. In each of the cavities 38A and 38B a structured electrode layer 40 may be arranged on the bottom surface of the first substrate 34A and a further structured electrode layer 40 may be arranged on the upper surface of the second substrate 34B. Each of the structured electrode layers 40 may form electrodes configured for trapping one or multiple ions 42 in the cavities 38A and 38B between the respective structured electrode layers 40. In the illustrated example, only single ions 42 are shown for the sake of simplicity.

The location of the ion 42 may be controlled by means of electrical voltages that may be applied to the structured electrode layers 40. For example, an ion 42 may be moved in the respective cavity in one or more lateral directions (e.g. in the x-y-plane) by means of AC and DC voltages that may be separately coupled to specific electrodes of the structured electrode layers 40. For example, the structured electrode layers 40 may include RF electrodes for RF trapping and DC electrodes for static electric-field trapping. Ion traps as described herein may be configured to trap a plurality of ions 42 that may be individually addressable and movable by appropriately controlling the electric potentials of the electrodes of the ion traps. In the illustrated example, the ion trap module 30 may be based on a three-dimensional ion trap geometry, wherein the structured electrode layers 40 may be arranged on top of each other with respect to the z-direction. However, it is to be understood that the concepts described herein are not restricted to three-dimensional ion trap geometries. In further examples, ion trap modules may correspond to or may include a surface ion trap (or surface-electrode ion trap). In surface ion traps, all electrodes (i.e. the DC electrodes and/or the RF electrodes) may be arranged in a same single plane. Ions may be stored and shuttled above this single plane.

One or more or even all of the modules included in a device in accordance with the disclosure may be at least partially manufactured based on a micro-fabrication technique. In one example, each of the structured electrode layers 40 may be formed based on a micro-fabrication technique. Micro-fabrication techniques (e.g. for electrode formation and structuring) may include one or more of photolithography processes (such as e.g. photoresist application, patterning, etching), deposition processes (such as e.g. CVD, PVD, sputtering), plating processes (such as e.g. electroless plating, galvanic plating), etching processes, etc. Electrodes formed in the structured electrode layers 40 may be structured with micrometer or sub-micrometer scale precision and alignment accuracy, thereby allowing complex electrode layouts without loss of controllability of the trapped ions 42.

The first optical module 32A may be mounted on a mounting region of the ion trap module 30. In the illustrated example, the mounting region may be arranged on the upper surface of the ion trap module 30. A mechanical connection between the modules 30 and 32A may e.g. be provided by an adhesive material or glue 44. In the illustrated case, the first optical module 32A may have an exemplary shape of a rectangular block. For example, the first optical module 32A may include or may be made of fused silica and/or glass.

Laser light may be used for trapped ion quantum computing. In this regard, the ions 42 may need to be exposed to laser light that has to be made available in the cavities 38A and 38B. Specific properties of the laser light (such as e.g. frequency, intensity, polarization, phase, etc.) may depend on the type of operation that is to be performed with the laser light with respect to the trapped ions 42, for example cooling, gate operations, etc.

The first optical module 32A may be configured to direct light from a device-external light source (not shown) to the ion trap module 30, or more particular into the left cavity 38A of the ion trap module 30. For this purpose, the device 1100 may include one or multiple waveguides 46A and 46B that may at least partially extend through the first optical module 32A and the ion trap module 30 as exemplarily shown in Figure 11. The waveguides 46A and 46B may be configured to optically couple the ion trap module 30 and the first optical module 32A via the intermediate mounting region. In the illustrated example, the waveguides 46A and 46B may be arranged such that laser light may approach the ion 42 in the cavity 38A from multiple different directions.

The second optical module 32B may include some or all features of the first optical module 32A as previously described. The second optical module 32B may include a recess 48 formed in its bottom surface such that a cavity may be formed between the first substrate 34A and the second optical module 32B. The second optical module 32B may be configured to direct light from a device-external light source (not shown) to the ion trap module 30, or more particular into the right cavity 38B of the ion trap module 30. For this purpose, a waveguide 46C may extend through the second optical module 32B. Laser light may propagate through the waveguide 46C and may enter the cavity formed by the recess 48 in form of one or multiple free space beams (or free space laser light beams) 50. The (collimated) free space beam 50 may then be successively reflected at mirrors 52A and 52B such that the laser light may be focused at the position of the ion 42. In the non-limiting illustrated example, the first mirror 52A may be planar while the second mirror 52B may be curved. The second optical module 32B and the ion trap module 30 may be optically coupled by means of the free space beam 50 via the intermediate mounting region.

Figure 12 includes Figures 12A to 12D schematically illustrating a side view and various sectional top views of a micro-fabricated device 1200 for controlling trapped ions in accordance with the disclosure. The sectional top views of Figures 12B to 12D are intended to show basic design possibilities that may be realized in a device according to the disclosure. In this regard, it is to be noted that a device in accordance with the disclosure does not necessarily need to have specific sectional planes that can provide sectional top views as exemplarily shown in Figures 12B to 12D. Rather, the sectional top views of Figures 12B to 12D may result from meandering sections through the device of Figure 12A. Stated differently, a sectional top view may show components which may be arranged at different levels in the side view of Figure 12A. In addition, a sectional top view may show components which are not necessarily shown in the side view of Figure 12A.

The device 1200 for controlling trapped ions of Figure 12 may be regarded as a more detailed version of previously described devices. The device 1200 may include some or all features of the device 1100 of Figure 11. The device 1200 may include an ion trap module 30 and an optical module 32 mounted over a mounting region on the upper surface of the ion trap module 30. In addition, the device 1200 may include an RF control module 54 and a DC control module 56 that may also be mounted over respective mounting regions on the upper surface of the ion trap module 30. The ion trap module 30 may correspond to an ion trap module 2 as described in previous examples. For example, the ion trap modules 2A to 2D of Figures 4A and 4B may be implemented in form of the ion trap module 30 of Figure 12. That is, multiple ion trap modules 30 may be assembled to form a large scale ion trap device as shown and described in connection with the examples of Figures 4A and 4B.

An optical fiber 58 may provide an optical connection between a device-external light source (not shown) and the optical module 32. Light received via the optical fiber 58 may at least partially propagate through the material of the optical module 32 and may exit the material as a free space beam 50. After being reflected at mirrors 52A and 52B the light may reach an ion 42 trapped between structured electrode layers 40 such that a desired operation (cooling, gate operation, etc.) may be applied to the ion 42.

The RF control module 54 may be electrically coupled to the ion trap module 30 via a respective mounting region. In the illustrated example, the mounting region may be located between the bottom surface of the RF control module 54 and the upper surface of the first substrate 34A. More particular, the RF control module 54 may be electrically connected to RF electrodes formed in the structured electrode layers 40 arranged on the bottom surface of the first substrate 34A and/or the upper surface of the second substrate 34B, respectively.

In a similar fashion, the DC control module 56 may be electrically coupled to the ion trap module 30 via a respective mounting region. More particular, the DC control module 56 may be electrically connected to DC electrodes formed in the opposing structured electrode layers 40. In the side view of Figure 12A, the RF electrodes and the DC electrodes may be arranged alternately. The DC control module 56 may be connected to a further component (such as e.g. a flexible printed circuit board, not shown) via an electrical connection 60.

The DC control module 56 may be configured to control DC signals provided to the DC electrodes, while the RF control module 54 may be configured to control RF signals provided to the RF electrodes. The DC signals and the RF signals may change the electric potentials of the DC electrodes and the RF electrodes in such a way that the location of the ion 42 may be controlled as desired.

Figure 12B illustrates a cross-sectional top view of the device 1200. Figure 12B is intended to illustrate locations of optical and electrical components of the device 1200. In particular, Figure 12B shows an exemplary arrangement of RF electrodes 62 and DC electrodes 64 that may be formed in structured electrode layers as well as an exemplary arrangement of mirrors 66 for reflecting light. It is noted that the shown components do not necessarily have to be arranged in an identical plane. The RF electrodes 62 may have an elongated shape while the DC electrodes 64 may have the shape of small squares. The RF electrodes 62 and the DC electrodes 64 may form a junction 68 at which one or multiple ions may be trapped. An exemplary number of eight mirrors 66 is indicated by larger squares.

In the illustrated example of Figure 12B, ions may be shuttled along the electrodes 62, 64 of the ion trap module 30 of the device 1200 in the x-direction and in the y-direction. Referring back to the examples of Figures 4A and 4B, the ion trap modules 2A to 2D may include electrodes 62, 64 similar to Figure 12B. As previously discussed, such electrodes 62, 64 of the ion trap modules 2A to 2D may then be aligned so that ions may be transported between the ion trap modules 2A to 2D. For example, RF electrodes 62 of the first ion trap module 2A and the second ion trap module 2B of Figure 4A may extend in the x-direction similar to Figure 12B and may be arranged at substantially a same y-coordinate, such that ions may be shuttled between the first ion trap module 2A and the second ion trap module 2B in the x-direction. A similar alignment may be made for DC electrodes 64 of the two ion trap modules 2A and 2B that may be arranged on both sides of the respective RF electrodes 62. In a similar fashion, RF electrodes 62 of the first ion trap module 2A and the third ion trap module 2C of Figure 4A may extend in the y-direction similar to Figure 12B and may be arranged at substantially a same x-coordinate, such that ions may be shuttled between the first ion trap module 2A and the third ion trap module 2C in the y-direction.

Figure 12C illustrates a cross-sectional top view of the device 1200. Figure 12C is intended to illustrate an exemplary electrical routing of signals between different planes and between different locations within a plane. DC signals may be transmitted between different planes by vias 70 indicated by small circles. In a similar fashion, RF signals may be transmitted between different planes by vias 72 indicated by larger circles. DC signals may be transmitted in a same plane by means of DC connecting lines 74. Each of the DC connecting lines 74 may electrically couple two or more of the vias 70.

Figure 12D illustrates a cross-sectional top view of the device 1200. Figure 12D is intended to illustrate locations of the various modules of the device 1200. It can be seen that the device 1200 may include an optical module 32, an RF control module 54 and two DC control modules 56A and 56B. An ion trap module 30 of the device 1200 may be arranged beneath these modules. Figure 12D further indicates the electrical connections as previously discussed in connection with Figure 12C.

Figure 13 illustrates a flowchart of a method for assembling a device for controlling trapped ions in accordance with the disclosure. The method may be used for fabricating previously described devices and may thus be read in connection with preceding figures. For example, the method may be used for manufacturing the devices 400A and 400B of Figures 4A and 4B. The method of Figure 13 is described in a general manner in order to qualitatively specify aspects of the disclosure. It is understood that the method may be extended by any of the aspects described in connection with other examples in accordance with the disclosure.

At 76, a first ion trap module including first electrodes configured to trap ions in a zone above the first electrodes may be provided. At 78, a second ion trap module including second electrodes configured to trap ions in a zone above the second electrodes may be arranged laterally next to the first ion trap module. At 80, the first ion trap module and the second ion trap module may be mechanically connected, wherein the first electrodes and the second electrodes may be aligned relative to each other so as to be configured to provide a shuttling of ions between the first ion trap module and the second ion trap module along the first electrodes and the second electrodes.

The method of Figure 13 may include further acts. For example, the method may further include an act of testing at least one of the first ion trap module and the second ion trap module for defects. A similar act may be applied to one or multiple other modules of the device that is to be assembled. In another act, defective modules may be discarded from assembling the device. In a further act, a module may be mounted on a mounting region of the first ion trap module. In yet a further act, the first ion trap module and the module may be electrically and/or optically coupled via the first mounting region.

Referring back to the example of Figure 1, the ion trap module 2 may be manufactured based on a technology configured to produce such large modules with high yield. The small modules 4A to 4D may be fabricated with less yield. Since the small modules 4A to 4D may be picked and placed onto mounting regions 6A to 6D of the ion trap module 2, it may be possible to sort out the defective small modules such that only properly working modules are mounted on the ion trap module 2 to form the assembled device. That is, one can assume that 100 percent of the small modules of the assembled device will work. The approach of using multiple small modules may therefore particularly improve an assembly yield for large assembled systems.

### Examples

In the following, devices for controlling trapped ions and methods for manufacturing thereof are described by means of examples.

Example 1 is a micro-fabricated device for controlling trapped ions, the device comprising: a first ion trap module comprising first electrodes configured to trap ions in a zone above the first electrodes; and a second ion trap module laterally arranged next to the first ion trap module and comprising second electrodes configured to trap ions in a zone above the second electrodes, wherein the first ion trap module and the second ion trap module are mechanically connected, and wherein the first electrodes and the second electrodes are aligned relative to each other so as to be configured to provide a shuttling of ions between the first ion trap module and the second ion trap module along the first electrodes and the second electrodes.

Example 2 is a device according to Example 1, further comprising: a first module mounted on a first mounting region of the first ion trap module, wherein the first ion trap module and the first module are electrically and/or optically coupled via the first mounting region.

Example 3 is a device according to Example 2, wherein the first module is at least one of: a DC control module configured to control DC signals provided to DC electrodes of the ion trap module; an RF control module configured to control RF signals provided to RF electrodes of the ion trap module; an optical module configured for at least one of: generating or amplifying light; directing light from a device-external light source to the ion trap module, splitting and distributing light in multiple positions of the device, performing at least one light manipulation process, performing at least one light detection process, coupling out light from the device to a device-external component; and a microwave module configured to provide and distribute microwave radiation in multiple positions of the device.

Example 4 is a device according to Example 2 or 3, wherein: the first ion trap module further comprises a second mounting region, and the device further comprises a second module, wherein the second module is mounted on the second mounting region of the first ion trap module.

Example 5 is a device according to Example 4, wherein the first ion trap module and the second module are electrically and/or optically coupled via the second mounting region.

Example 6 is a device according to any of Examples 2 to 5, wherein: the first ion trap module and the first module are fabricated from at least one of silicon, fused silica, sapphire, diamond, silicon carbide, and glass; and/or the first ion trap module and the first module are fabricated from different materials.

Example 7 is a device according to any of Examples 2 to 6, wherein a thermal expansion coefficient of the first ion trap module differs from a thermal expansion coefficient of the first module.

Example 8 is a device according to any of Examples 2 to 7, wherein the first ion trap module and the first module are configured to provide fully distinct functionalities for an operation of the device.

Example 9 is a device according to Example 4, wherein: the first module and the second module are mounted on a same side of the first ion trap module, or the first module and the second module are mounted on opposing sides of the first ion trap module.

Example 10 is a device according to any of Examples 2 to 9, wherein: the first ion trap module and the first module are mechanically coupled by at least one of gluing and bonding, and/or the first ion trap module and the first module are electrically coupled by at least one of a solder bump, an anisotropic conductive adhesive and a wire bond, and/or the first ion trap module and the first module are optically coupled by at least one of a waveguide and a free space beam.

Example 11 is a device according to any of the preceding Examples, wherein the first electrodes and the second electrodes are arranged in a common plane.

Example 12 is a device according to any of the preceding Examples, wherein: the first electrodes are DC electrodes, and the second electrodes are DC electrodes; or the first electrodes are RF electrodes and DC electrodes, and the second electrodes are RF electrodes and DC electrodes.

Example 13 is a device according to any of the preceding Examples, wherein: the device further comprises at least one connector module configured to mechanically connect the first ion trap module and the second ion trap module; and/or the first ion trap module comprises at least one protruding portion arranged at a periphery of the first ion trap module, the second ion trap module comprises at least one notch arranged at a periphery of the second ion trap module, and the first ion trap module and the second ion trap module are mechanically connected by an insertion of the at least one protruding portion of the first ion trap module into the at least one notch of the second ion trap module.

Example 14 is a method for assembling a device for controlling trapped ions, the method comprising: providing a first ion trap module comprising first electrodes configured to trap ions in a zone above the first electrodes; and arranging a second ion trap module comprising second electrodes configured to trap ions in a zone above the second electrodes laterally next to the first ion trap module; and mechanically connecting the first ion trap module and the second ion trap module, wherein the first electrodes and the second electrodes are aligned relative to each other so as to be configured to provide a shuttling of ions between the first ion trap module and the second ion trap module along the first electrodes and the second electrodes.

Example 15 is a method according to Example 14, further comprising: testing at least one of the first ion trap module and the second ion trap module for defects, and discarding defective modules from assembling the device; and/or mounting a first module on a first mounting region of the first ion trap module, and electrically and/or optically coupling the first ion trap module and the first module via the first mounting region.

As used in this specification, the terms "electrically connected", "electrically coupled", "optically connected" or "optically coupled" or similar terms are not meant to mean that the elements are directly connected together; intervening elements may be provided between the "electrically connected", "electrically coupled", "optically connected" or "optically coupled" elements, respectively. However, in accordance with the disclosure, the above-mentioned and similar terms may, optionally, also have the specific meaning that the elements are directly connected together, i.e. that no intervening elements are provided between the "electrically connected", "electrically coupled", "optically connected" or "optically coupled" elements, respectively.

Further, the words "over" or "under" with regard to a part, element or material layer formed or located or arranged "over" or "under" a surface may be used herein to mean that the part, element or material layer be located (e.g. placed, formed, arranged, deposited, etc.) "directly on" or "directly under", e.g. in direct contact with, the implied surface. The word "over" or "under" used with regard to a part, element or material layer formed or located or arranged "over" or "under" a surface may, however, either be used herein to mean that the part, element or material layer be located (e.g. placed, formed, arranged, deposited, etc.) "indirectly on" or "indirectly under" the implied surface, with one or multiple additional parts, elements or layers being arranged between the implied surface and the part, element or material layer.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A micro-fabricated device for controlling trapped ions, the device comprising:
a first ion trap module (2A) comprising first electrodes (62, 64) configured to trap ions in a zone above the first electrodes (62, 64); and
a second ion trap module (2B) laterally arranged next to the first ion trap module (2A) and comprising second electrodes (62, 64) configured to trap ions in a zone above the second electrodes (62, 64),
wherein the first ion trap module (2A) and the second ion trap module (2B) are mechanically connected, and
wherein the first electrodes (62, 64) and the second electrodes (62, 64) are aligned relative to each other so as to be configured to provide a shuttling of ions between the first ion trap module (2A) and the second ion trap module (2B) along the first electrodes (62, 64) and the second electrodes (62, 64).

2. The device of claim 1, further comprising:
a first module (4A) mounted on a first mounting region (6A) of the first ion trap module (2A),
wherein the first ion trap module (2A) and the first module (4A) are electrically and/or optically coupled via the first mounting region (6A).

3. The device of claim 2, wherein the first module (4A) is at least one of:
a DC control module (56) configured to control DC signals provided to DC electrodes of the ion trap module (30) ;
an RF control module (54) configured to control RF signals provided to RF electrodes of the ion trap module (30) ;
an optical module (32) configured for at least one of:
generating or amplifying light;
directing light from a device-external light source to the ion trap module (30),
splitting and distributing light in multiple positions of the device,
performing at least one light manipulation process,
performing at least one light detection process,
coupling out light from the device to a device-external component; and
a microwave module configured to provide and distribute microwave radiation in multiple positions of the device.

4. The device of claim 2 or 3, wherein:
the first ion trap module (2A) further comprises a second mounting region (6B), and
the device further comprises a second module (4B), wherein the second module (4B) is mounted on the second mounting region (6B) of the first ion trap module (2A).

5. The device of claim 4, wherein the first ion trap module (2A) and the second module (4B) are electrically and/or optically coupled via the second mounting region (6B).

6. The device of any of claims 2 to 5, wherein:
the first ion trap module (2A) and the first module (4A) are fabricated from at least one of silicon, fused silica, sapphire, diamond, silicon carbide, and glass; and/or
the first ion trap module (2A) and the first module (4A) are fabricated from different materials.

7. The device of any of claims 2 to 6, wherein a thermal expansion coefficient of the first ion trap module (2A) differs from a thermal expansion coefficient of the first module (4A).

8. The device of any of claims 2 to 7, wherein the first ion trap module (2A) and the first module (4A) are configured to provide fully distinct functionalities for an operation of the device.

9. The device of claim 4, wherein:
the first module (4A) and the second module (4B) are mounted on a same side of the first ion trap module (2A), or
the first module (4A) and the second module (4B) are mounted on opposing sides of the first ion trap module (2A).

10. The device of any of claims 2 to 9, wherein:
the first ion trap module (2A) and the first module (4A) are mechanically coupled by at least one of gluing and bonding, and/or
the first ion trap module (2A) and the first module (4A) are electrically coupled by at least one of a solder bump, an anisotropic conductive adhesive and a wire bond, and/or
the first ion trap module (2A) and the first module (4A) are optically coupled by at least one of a waveguide (46) and a free space beam (50).

11. The device of any of the preceding claims, wherein the first electrodes (62, 64) and the second electrodes (62, 64) are arranged in a common plane.

12. The device of any of the preceding claims, wherein:
the first electrodes (62, 64) are DC electrodes, and the second electrodes (62, 64) are DC electrodes; or
the first electrodes (62, 64) are RF electrodes and DC electrodes, and the second electrodes (62, 64) are RF electrodes and DC electrodes.

13. The device of any of the preceding claims, wherein:
the device further comprises at least one connector module (8A) configured to mechanically connect the first ion trap module (2A) and the second ion trap module (2B); and/or
the first ion trap module (2A) comprises at least one protruding portion arranged at a periphery of the first ion trap module (2A), the second ion trap module (2B) comprises at least one notch arranged at a periphery of the second ion trap module (2B), and the first ion trap module (2A) and the second ion trap module (2B) are mechanically connected by an insertion of the at least one protruding portion of the first ion trap module (2A) into the at least one notch of the second ion trap module (2B).

14. A method for assembling a device for controlling trapped ions, the method comprising:
providing a first ion trap module (2A) comprising first electrodes (62, 64) configured to trap ions in a zone above the first electrodes (62, 64); and
arranging a second ion trap module (2B) comprising second electrodes (62, 64) configured to trap ions in a zone above the second electrodes (62, 64) laterally next to the first ion trap module (2A); and
mechanically connecting the first ion trap module (2A) and the second ion trap module (2B), wherein the first electrodes (62, 64) and the second electrodes (62, 64) are aligned relative to each other so as to be configured to provide a shuttling of ions between the first ion trap module (2A) and the second ion trap module (2B) along the first electrodes (62, 64) and the second electrodes (62, 64).

15. The method of claim 14, further comprising:
testing at least one of the first ion trap module (2A) and the second ion trap module (2B) for defects, and discarding defective modules from assembling the device; and/or
mounting a first module (4A) on a first mounting region (6A) of the first ion trap module (2A), and electrically and/or optically coupling the first ion trap module (2A) and the first module (4A) via the first mounting region (6A).
